# EUROPEAN PATENT APPLICATION

(11) **EP 4 206 277 A1**
(43) Date of publication of application: **05.07.2023**
(21) Application number: 21862007.8
(22) Date of filing: 24.08.2021
(51) Int. Cl.: C08L 25/08, C08L 23/06, C08L 23/12, C08K 5/00

(54) **THERMOPLASTIC RESIN COMPOSITION, AND MOLDED ARTICLE FORMED THEREFROM**

(30) Priority: 28.08.2020 KR 20200109342
(71) Applicant: Lotte Chemical Corporation, Seoul, 05551 (KR)
(72) Inventor: SEO, Seok Beom, Uiwang-Si Gyeonggi-do 16073 (KR); PARK, Seung Bin, Uiwang-Si Gyeonggi-do 16073 (KR); SHIN, Na Hyeon, Uiwang-Si Gyeonggi-do 16073 (KR)
(74) Representative: Germain Maureau
(86) International application number: PCT/KR2021/011237
(87) International publication number: WO 2022/045710

(57) **Abstract**

A thermoplastic resin composition according to the present invention comprises: about 100 parts by weight of a styrene-ethylene-butylene-styrene copolymer including about 10 to about 50 wt% of a first styrene-ethylene-butylene-styrene copolymer having a weight average molecular weight of about 250,000 to about 350,000 g/mol, and about 50 to about 90 wt% of a second styrene-ethylene-butylene-styrene copolymer having a weight average molecular weight of about 100,000 to about 200,000 g/mol; and about 1 to about 25 parts by weight of a polyolefin resin. The thermoplastic resin composition and a molded article formed therefrom are environmentally-friendly, and have excellent processability, flexibility, elastic recovery, lightweightness, durability, and the like.

## Description

### [Technical Field]

The present invention relates to a thermoplastic resin composition and a molded article formed of the same. More particularly, the present invention relates to a thermoplastic resin composition which is eco-friendly and has properties of high processability, high flexibility, high elastic recovery, light weight, and high durability, and a molded product formed of the same.

### [Background Art]

PVC products have long been widely used due to good physical properties and low price thereof.

However, conventional PVC materials are not suitable for use as a material for pet products due to the drawbacks of decrease in flexibility and durability caused by leakage of a phthalate plasticizer and generation of harmful substances such as chlorine and dioxin, which are suspected to cause endocrine disorders. Accordingly, silicone resins, rubbers, and the like have been studied as alternative materials. However, as compared with PVC materials, such silicone resins or rubbers have poor mechanical properties, compatibility, and productivity, making manufacture difficult, and raw resin materials therefor are expensive.

Therefore, there is a need for an alternative material suitable for use as a material for pet products, which is eco-friendly while maintaining good physical properties and processability of typical PVC materials.

### [Disclosure]

### [Technical Problem]

It is an object of the present invention to provide a thermoplastic resin composition which is eco-friendly and has properties of high processability, high flexibility, high elastic recovery, light weight, and high durability.

It is another object of the present invention to provide a molded article formed of the thermoplastic resin composition.

The above and other objects of the present invention can be achieved by embodiments of the present invention described below.

### [Technical Solution]

1. One aspect of the present invention relates to a thermoplastic resin composition. The thermoplastic resin composition includes: about 100 parts by weight of a styrene-ethylene-butylene-styrene copolymer including about 10 wt% to about 50 wt% of a first styrene-ethylene-butylene-styrene copolymer having a weight average molecular weight of about 250,000 g/mol to about 350,000 g/mol and about 50 wt% to about 90 wt% of a second styrene-ethylene-butylene-styrene copolymer having a weight average molecular weight of about 100,000 g/mol to about 200,000 g/mol; and about 1 part by weight to about 25 parts by weight of a polyolefin resin.
2. In embodiment 1, the first styrene-ethylene-butylene-styrene copolymer may have a melt-flow index (MI) of about 1 g/10 min to about 7 g/10 min, as measured at a temperature of 230°C under a load of 2.16 kg in accordance with ASTM D1238, and the second styrene-ethylene-butylene-styrene copolymer may have a melt-flow index of about 10 g/10 min to about 30 g/10 min, as measured at a temperature of 230°C under a load of 2.16 kg in accordance with ASTM D1238.
3. In embodiment 1 or 2, the first styrene-ethylene-butylene-styrene copolymer may have a styrene content of about 30 wt% to about 40 wt% and the second styrene-ethylene-butylene-styrene copolymer may have a styrene content of about 5 wt% to about 30 wt%.
4. In embodiments 1 to 3, a weight ratio of the first styrene-ethylene-butylene-styrene copolymer to the second styrene-ethylene-butylene-styrene copolymer may be about 1:1 to about 1:4.
5. In embodiments 1 to 4, the polyolefin resin may include a polyethylene resin and a polypropylene resin, wherein a weight ratio of the polyethylene resin to the polypropylene resin may be about 1:1 to about 3:1.
6. In embodiments 1 to 5, the thermoplastic resin composition may further include: about 0.01 parts by weight to about 5 parts by weight of an antioxidant, wherein the antioxidant may include a phenol antioxidant, an amine antioxidant, a sulfur antioxidant, a phosphorus antioxidant, or a combination thereof.
7. In embodiments 1 to 6, the thermoplastic resin composition may further include: about 0.01 parts by weight to about 5 parts by weight of a lubricant, wherein the lubricant may include a fatty acid wax, a fatty acid amide wax, a hydrocarbon wax, or a combination thereof.
8. In embodiments 1 to 7, the thermoplastic resin composition may have a Shore A hardness of about 59 or more, as measured in accordance with ISO 868.
9. In embodiments 1 to 8, the thermoplastic resin composition may have a melt-flow index (MI) of about 4 g/10 min or more, as measured at a temperature of 230°C under a load of 5 kg in accordance with ISO 1133.
10. In embodiments 1 to 9, the thermoplastic resin composition may have a puncture strength of about 3.9 kgf/mm or more, as measured at a rate of 100 mm/min in accordance with ASTM D3763-98.
11. Another aspect of the present invention relates to a molded article. The molded article is formed of the thermoplastic resin composition according to any one of embodiments 1 to 10.

### [Advantageous Effects]

The present invention provides a thermoplastic resin composition which is eco-friendly and has properties of high processability, high flexibility, high elastic recovery, light weight, and high durability, and a molded article formed of the same.

### [Best Mode]

As used herein, the singular forms, "a," "an," and "the" are intended to include the plural forms as well, unless the context clearly indicates otherwise.

Like components will be denoted by like reference numerals throughout the specification. In addition, description of known functions and constructions which may unnecessarily obscure the subject matter of the present invention will be omitted.

It will be further understood that the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof.

Although the terms first, second, etc. may be used herein to describe various elements, components, regions, layers, and/or sections, these elements, components, regions, layers, and/or sections should not be limited by these terms. These terms are used to distinguish one element, component, region, layer, and/or section from another element, component, region, layer, and/or section.

As used herein, a numerical value related to a certain component is construed to include a tolerance range in interpretation of components, unless clearly stated otherwise.

As used herein to represent a specific numerical range, the expression "a to b" means "greater than or equal to a and less than or equal to b (a≤ and ≤b)".

A thermoplastic resin composition according to the present invention may include: about 100 parts by weight of a styrene-ethylene-butylene-styrene copolymer including about 10% by weight (wt%) to about 50 wt% of a first styrene-ethylene-butylene-styrene copolymer having a weight average molecular weight of about 250,000 g/mol to about 350,000 g/mol and a second styrene-ethylene-butylene-styrene copolymer having a weight average molecular weight of about 100,000 g/mol to about 200,000 g/mol; and about 1 part by weight to about 25 parts by weight of a polyolefin resin. Here, "weight average molecular weight' may refer to a weight average molecular weight determined by polystyrene-calibrated gel permeation chromatography (GPC).

Now, each component of the thermoplastic resin composition will be described in detail.

### First styrene-ethylene-butylene-styrene copolymer

The first styrene-ethylene-butylene-styrene copolymer (hereinafter also referred to as "first SEBS") may improve flexibility, elastic recovery, light weight properties, and durability of the thermoplastic resin composition, and may include a styrene-ethylene-butylene-styrene copolymer having a weight average molecular weight of about 250,000 g/mol to about 350,000 g/mol, which can be used in typical thermoplastic resin compositions. For example, the first SEBS may have a weight average molecular weight of about 270,000 g/mol to about 350,000 g/mol or about 300,000 g/mol to about 340,000 g/mol, without being limited thereto.

The first SEBS may be present in an amount of about 10 wt% to about 50 wt% based on a total weight of the styrene-ethylene-butylene-styrene copolymer. When the content of the first SEBS satisfies the above range, the thermoplastic resin composition may have properties of high flexibility, high elastic recovery, light weight, and high durability. For example, the first SEBS may be present in an amount of about 15 wt% to about 50 wt%, about 20 wt% to about 50 wt%, or about 20 wt% to about 42 wt% based on a total weight of the styrene-ethylene-butylene-styrene copolymer, without being limited thereto.

According to one embodiment, the first SEBS may have a melt-flow index (MI) of about 1 g/10 min to about 7 g/10 min, as measured at a temperature of 230°C under a load of 2.16 kg in accordance with ASTM D1238. When the melt-flow index of the first SEBS satisfies the above range, the thermoplastic resin composition may have properties of high flexibility, high elastic recovery, light weight, and high durability. For example, the first SEBS may have a melt-flow index (MI) of about 1 g/10 min to about 5 g/10 min or about 2 g/10 min to about 3 g/10 min, without being limited thereto.

According to one embodiment, the first SEBS may have a styrene content of about 30 wt% to about 40 wt%. When the content of styrene in the first SEBS satisfies the above range, the thermoplastic resin composition may have properties of high flexibility, high elastic recovery, light weight, and high durability. For example, the first SEBS may have a styrene content of about 30 wt% to about 35 wt%, without being limited thereto.

According to one embodiment, the first SEBS may have a density of about 0.80 g/cm³ to about 1.00 g/cm³, as measured in accordance with ASTM D792. When the density of the first SEBS satisfies the above range, the thermoplastic resin composition may have properties of high flexibility, high elastic recovery, light weight, and high durability. For example, the first SEBS may have a density of about 0.85 g/cm³ to about 0.98 g/cm³ or about 0.85 g/cm³ to about 0.95 g/cm³, without being limited thereto.

### Second styrene-ethylene-butylene-styrene copolymer

The second styrene-ethylene-butylene-styrene copolymer (hereinafter also referred to as "second SEBS") may improve processability (moldability), elastic recovery, and light weight properties of the thermoplastic resin composition in conjunction with the first SEBS, and may include a styrene-ethylene-butylene-styrene copolymer having a weight average molecular weight of about 100,000 g/mol to about 200,000 g/mol, which can be used in typical thermoplastic resin compositions. For example, the second SEBS may have a weight average molecular weight of about 110,000 g/mol to about 170,000 g/mol, about 120,000 g/mol to about 160,000 g/mol, or about 130,000 g/mol to about 150,000 g/mol, without being limited thereto.

The second SEBS may be present in an amount of about 50 wt% to about 90 wt% based on a total weight of the styrene-ethylene-butylene-styrene copolymer. When the content of the second SEBS satisfies the above range, the thermoplastic resin composition may have properties of high processability, high elastic recovery, and light weight. For example, the second SEBS may be present in an amount of about 50 wt% to about 85 wt%, about 20 wt% to about 80 wt%, or about 58 wt% to about 80 wt% based on a total weight of the styrene-ethylene-butylene-styrene copolymer, without being limited thereto.

According to one embodiment, the second SEBS may have a melt-flow index (MI) of about 10 g/10 min to about 30 g/10 min, as measured at a temperature of 230°C under a load of 2.16 kg in accordance with ASTM D1238. When the melt-flow index (MI) of the second SEBS satisfies the above range, the thermoplastic resin composition may have properties of high processability, high elastic recovery, and light weight. For example, the second SEBS may have a melt-flow index (MI) of about 10 g/10 min to about 25 g/10 min, about 10 g/10 min to about 20 g/10 min, or about 15 g/10 min to about 20 g/10 min, without being limited thereto.

According to one embodiment, the second SEBS may have a styrene content of about 5 wt% to about 30 wt%. When the content of styrene in the second SEBS satisfies the above range, the thermoplastic resin composition may have properties of high processability, high elastic recovery, and light weight. For example, the second SEBS may have a styrene content of about 10 wt% to about 30 wt% or about 15 wt% to about 30 wt%, without being limited thereto.

According to one embodiment, the second SEBS may have a density of about 0.80 g/cm³ to about 1.00 g/cm³, as measured in accordance with ASTM D792. When the density of the second SEBS satisfies the above range, the thermoplastic resin composition may have properties of high processability, high elastic recovery, and light weight. For example, the second SEBS may have a density of about 0.85 g/cm³ to about 0.98 g/cm³ or about 0.85 g/cm³ to about 0.95 g/cm³, without being limited thereto.

According to one embodiment, the first SEBS and the second SEBS may be present in a weight ratio of about 1:1 to about 1:4. When the weight ratio of the first SEBS to the second SEBS satisfies the above range, the thermoplastic resin composition may have properties of high processability, high flexibility, high elastic recovery, light weight, high durability, and high balance therebetween. For example, the first SEBS and the second SEBS may be present in a weight ratio of about 1:1.4 to about 1:4, without being limited thereto.

### Polyolefin resin

The polyolefin resin may improve mechanical properties and processability of the thermoplastic resin composition in conjunction with the first SEBS and the second SEBS, and may include polyolefin resins that can be used in typical thermoplastic resin compositions. For example, the polyolefin resin may include: a polyethylene resin including polyethylene, such as low-density polyethylene (LDPE), medium-density polyethylene (MDPE), high-density polyethylene (HDPE), and linear low-density polyethylene (LLDPE), an ethylene-vinyl acetate copolymer (EVA), an ethylene-acrylate copolymer, and a mixture thereof; a polypropylene resin including polypropylene, a propylene-ethylene copolymer, a propylene-1-butene copolymer, and a mixture thereof; a cross-linked polymer thereof; a polyisobutene-containing blend; and a combination thereof. According to one embodiment, the polyolefin resin may include a polyethylene resin, a polypropylene resin, a propylene-ethylene copolymer, and a combination thereof.

The polyolefin resin may be included in an amount of about 1 part by weight to about 25 parts by weight per about 100 parts by weight of the styrene-ethylene-butylene-styrene copolymer. When the content of the polyolefin resin satisfies the above range, the thermoplastic resin composition may have good mechanical properties and processability. For example, the polyolefin resin may be included in an amount of about 1 part by weight to about 20 parts by weight or about 5 parts by weight to about 20 parts by weight per about 100 parts by weight of the styrene-ethylene-butylene-styrene copolymer.

According to one embodiment, the polyolefin resin may include a polyethylene resin, wherein the polyethylene resin may have a melt-flow index (MI) of about 10 g/10 min to about 40 g/10 min, for example, about 15 g/10 min to about 35 g/10 min, as measured at a temperature of 190°C under a load of 2.16 kg in accordance with ASTM D1238, without being limited thereto. When the melt-flow index (MI) of the polyethylene resin satisfies the above range, the polyethylene resin may further improve processability of the thermoplastic resin composition.

According to one embodiment, the polyolefin resin may include a polyethylene resin, wherein the polyethylene resin may have a density of about 0.80 g/cm³ to about 1.00 g/cm³, for example, about 0.85 g/cm³ to about 0.95 g/cm³, as measured in accordance with ASTM D1505, without being limited thereto. When the density of the polyethylene resin satisfies the above range, the polyethylene resin may further improve light weight properties of the thermoplastic resin composition.

According to one embodiment, the polyolefin resin may include a polypropylene resin, wherein the polypropylene resin may have a melt-flow index (MI) of about 3 g/10 min to about 12 g/10 min, for example, about 5 g/10 min to about 10 g/10 min, as measured at a temperature of 190°C under a load of 2.16 kg in accordance with ASTM D1238, without being limited thereto. When the melt-flow index (MI) of the polypropylene resin satisfies the above range, the polypropylene resin may further improve processability of the thermoplastic resin composition.

According to one embodiment, the polyolefin resin may include a polypropylene resin, wherein the polypropylene resin may have a density of about 0.80 g/cm³ to about 1.00 g/cm³, for example, about 0.85 g/cm³ to about 0.95 g/cm³, as measured in accordance with ASTM D792, without being limited thereto. When the density of the polypropylene resin satisfies the above range, the polypropylene resin may further improve light weight properties of the thermoplastic resin composition.

According to one embodiment, the polyolefin resin may include both a polyethylene resin and a polypropylene resin. In this case, the thermoplastic resin composition may have further improved mechanical properties and processability.

According to one embodiment, the polyolefin resin may include a polyethylene resin and a polypropylene resin in a weight ratio of about 1:1 to about 3:1. When the weight ratio of the polyethylene resin to the polypropylene resin satisfies the above range, the thermoplastic resin composition may have good mechanical properties and processability. For example, the polyethylene resin and the polypropylene resin may be present in a weight ratio of about 1.5:1 to about 2.5:1 in the polyolefin resin, without being limited thereto.

According to one embodiment, the first styrene-ethylene-butylene-styrene copolymer and the polyolefin resin may be present in a weight ratio of about 0.1:1 to about 10: 1 (for example, about 1:1 to about 10:1 or about 1.1:1 to about 7:1), without being limited thereto. When the weight ratio of the first styrene-ethylene-butylene-styrene copolymer to the polyolefin resin satisfies the above range, the thermoplastic resin composition may have properties of high processability, high flexibility, high elastic recovery, light weight, and high durability.

According to one embodiment, the second styrene-ethylene-butylene-styrene copolymer and the polyolefin resin may be present in a weight ratio of about 0.1:1 to about 20:1 (for example, about 1:1 to about 20:1 or about 5:1 to about 10:1), without being limited thereto. When the weight ratio of the second styrene-ethylene-butylene-styrene copolymer to the polyolefin resin satisfies the above range, the thermoplastic resin composition may have properties of high processability, high flexibility, high elastic recovery, light weight, and high durability.

The thermoplastic resin composition according to the present invention may further include at least one selected from an antioxidant and a lubricant.

### Antioxidant

The antioxidant may include an antioxidant that can be used in typical thermoplastic resin compositions. For example, the antioxidant may include a phenol antioxidant, an amine antioxidant, a sulfur antioxidant, a phosphorus antioxidant, or a composite antioxidant including two or more antioxidant systems, without being limited to.

Although the content of the antioxidant is not particularly limited, the antioxidant may be included in an amount of about 0.01 parts by weight to about 5 parts by weight, for example, about 0.05 parts by weight to about 3 parts by weight, per about 100 parts by weight of the styrene-ethylene-butylene-styrene copolymer. When the content of the antioxidant satisfies the above range, the antioxidant may be highly effective in preventing oxidation, particularly preventing oxidation of the polyolefin resin during an extrusion process, without affecting other components or physical properties of the thermoplastic resin composition.

### Lubricant

The lubricant may include a lubricant that can be used in typical thermoplastic resin compositions. For example, the lubricant may include a fatty acid wax, such as stearic acid, a fatty acid amide wax, such as stearic amide and oleic amide, and a hydrocarbon wax, such as paraffin wax and PE wax.

Although the content of the lubricant is not particularly limited, the lubricant may be included in an amount of about 0.01 parts by weight to about 5 parts by weight, for example, about 0.05 parts by weight to about 3 parts by weight, per about 100 parts by weight of the styrene-ethylene-butylene-styrene copolymer. When the content of the lubricant satisfies the above range, the lubricant may provide good dispersibility and slipping properties without affecting other components or physical properties of the thermoplastic resin composition.

In addition, the thermoplastic resin composition according to the present invention may include an additive selected from among a dispersant, a flame retardant, an impact modifier, an anti-drip agent, a release agent, a nucleating agent, an antistatic agent, a stabilizer, a pigment, a dye, or a combination of two or more thereof, without altering the desired effects of the present invention. Although the additive may be included in an amount of about 0.01 parts by weight to about 10 parts by weight, for example, about 0.05 parts by weight to about 5 parts by weight, per about 100 parts by weight of the styrene-ethylene-butylene-styrene copolymer, the content of the additive may be varied as needed.

The thermoplastic resin composition according to the present invention may be prepared in pellet form by mixing the aforementioned components, followed by melt extrusion in a typical twin screw extruder at about 170°C to about 250°C, for example, about 170°C to about 230°C.

According to one embodiment, the thermoplastic resin composition may have a Shore A hardness of about 59 or more, for example, about 59 to about 80 or about 59 to about 70, as measured in accordance with ISO 868.

According to one embodiment, the thermoplastic resin composition may have a density of about 0.80 g/cm³ to about 1.00 g/cm³, for example, about 0.85 g/cm³ to about 0.98 g/cm³ or about 0.85 g/cm³ to about 0.95 g/cm³, as measured using an electronic densimeter in accordance with ISO 1183.

According to one embodiment, the thermoplastic resin composition may have a melt-flow index (MI) of about 4 g/10 min or more, for example, about 4 g/10 min to about 50 g/10 min, about 4 g/10 min to about 35 g/10 min, or about 4 g/10 min to about 30 g/10 min, as measured at a temperature of 230°C under a load of 5 kg in accordance with ISO 1133.

According to one embodiment, the thermoplastic resin composition may have a puncture strength of about 3.9 kgf/mm or more, for example, about 4 kgf/mm or more, about 4.1 kgf/mm or more, or about 4.2 kgf/mm or more, as measured at a rate of 100 mm/min in accordance with ASTM D3763-98.

According to one embodiment, the thermoplastic resin composition may have a flow length (spiral length) of about 31 mm to about 50 mm, for example, about 31.8 mm to about 49 mm, as measured using a spiral mold (thickness: 1 mm, width: 1 cm) in a 150MT hydraulic injection molding machine at 190°C to 230°C under conditions of: injection pressure of 120 MPa; injection rate of 50 mm/s; and cushion of 5 mm. A longer flow length indicates better processability (moldability).

A molded article according to the present invention is formed of the thermoplastic resin composition described above. The thermoplastic resin composition may be prepared in pellet form and the prepared pellets may be manufactured into various molded articles (products) by various molding methods, such as injection molding, extrusion, vacuum molding, casting, or the like. Such molding methods are well known to those skilled in the art. The molded article is eco-friendly and has properties of high processability, high flexibility, high elastic recovery, light weight, high durability, and high balance therebetween, and thus may be particularly useful in pet product applications.

### [Mode for Invention]

Next, the present invention will be described in more detail with reference to some examples. It should be understood that these examples are provided for illustration only and are not to be construed in any way as limiting the present invention.

### EXAMPLE

Details of components used in Examples and Comparative Examples are as follows:
(A) Styrene-ethylene-butylene-styrene copolymer
   (a1) A first styrene-ethylene-butylene-styrene copolymer (TAIPOL 6151, TSRC Corp.) having a weight average molecular weight of 300,000 g/mol, a melt-flow index (MI) of 3 g/10 min (230°C, 2.16 kg, ASTM D1238), a styrene content of 32.5% (TDM-02), and a density of 0.91 g/cm³ (ASTM D792) was used.
   (a2) A first styrene-ethylene-butylene-styrene copolymer (YH-503T, SINOPEC Corp.) having a weight average molecular weight of 340,000 g/mol, a melt-flow index (MI) of 2 g/10 min (230°C, 2.16 kg, ASTM D1238), a styrene content of 33% (TDM-02), and a density of 0.91 g/cm³ (ASTM D792) was used.
   (a3) A second styrene-ethylene-butylene-styrene copolymer (G1643M, KRATON Corp.) having a weight average molecular weight of 150,000 g/mol, a melt-flow index (MI) of 18 g/10 min (230°C, 2.16 kg, ASTM D1238), a styrene content of 18.6% (TDM-02), and a density of 0.91 g/cm³ (ASTM D792) was used.
   (a4) A second styrene-ethylene-butylene-styrene copolymer (TAIPOL 6150, TSRC Corp.) having a weight average molecular weight of 130,000 g/mol, a melt-flow index (MI) of 18 g/10 min (230°C, 2.16 kg, ASTM D1238), a styrene content of 29% (TDM-02), and a density of 0.91 g/cm³ (ASTM D792) was used.
(B) Polyolefin resin
   (b1) A polyethylene resin (XJ-700, Lotte Chemical Corp.) having a melt-flow index (MI) of 22 g/10 min (190°C, 2.16 kg, ASTM D1238) and a density of 0.91 g/cm³ (ASTM D1505) was used.
   (b2) A polypropylene resin (SEP-550H, Lotte Chemical Corp.) having a melt-flow index (MI) of 7.5 g/10 min (190°C, 2.16 kg, ASTM D1238) and a density of 0.9 g/cm³ (ASTM D792) was used.
(C) Composite (phosphorus/phenol) antioxidant: S41B, Songwon.
(D) Amide-based lubricant: LC-140, Lion Chemtech Co., Ltd.

### Examples 1 to 5 and Comparative examples 1 to 8

The aforementioned components were mixed in amounts as listed in Tables 1 and 2 using an internal mixer, followed by melt extrusion in a twin screw extruder (screw diameter: 45 mm, L/D: 52) under conditions of: feed rate of 35 kg/hr; screw speed of 300 rpm; and extrusion temperature of 170°C to 210°C. Then, the resultant product in strand form was cooled with water and then was pelletized using a pelletizer.

Then, the obtained pellets were fabricated into a specimen having a size of 100 mm× 120 mm×2 mm using a 350-ton hydraulic injection molding machine. Here, the injection pressure was 80 MPa. And the temperature of a hopper was 50°C; the temperatures of a first cylinder, a second cylinder, a third cylinder, a first die, and a second die were 190°C, 210°C, 220°C, 230°C, and 220°C, respectively; the injection time was 7 seconds; and the cooling time was 60 seconds.

### Property evaluation method

(1) Shore A hardness: Shore A hardness was measured using a Shore A durometer in accordance with ISO 868. A stack of three 2 mm thick specimens was used for evaluation and a hardness value after 15 seconds from the start of measurement was recorded and is shown in Tables 1 and 2 below.
(2) Density (unit: g/cm³): Density was measured using an electronic densimeter in accordance with ISO 1183.
(3) Melt-flow index (MI) (unit: g/10 min): Melt-flow index was measured at a temperature of 230°C under a load of 2.16 kg in accordance with ISO 1133.
(4) Puncture strength (unit: kgf/mm): Puncture strength was measured 5 times at a rate of 100 mm/min in accordance with ASTM D3763-98, followed by averaging the measurements.
(5) Flow length (spiral length) (unit: mm): Flow length was measured using a spiral mold (thickness: 1 mm, width: 1 cm) in a 150MT hydraulic injection molding machine at 190°C to 230°C under conditions of: injection pressure of 120 MPa; injection rate of 50 mm/s; and cushion of 5 mm. A longer flow length indicates better processability (moldability).

**Table 1**

| | Example | | | | |
|---|---|---|---|---|---|
| | 1 | 2 | 3 | 4 | 5 |
| (a1) (wt%) | 20 | 41.18 | 20 | 20 | 50 |
| (a2) (wt%) | - | - | - | - | - |
| (a3) (wt%) | 80 | 58.82 | 80 | 80 | 50 |
| (a4) (wt%) | - | - | - | - | - |
| (b1) (parts by weight) | 11.18 | 11.18 | 11.18 | - | 11.18 |
| (b2) (parts by weight) | 5.88 | 5.88 | - | 5.88 | 5.88 |
| (C) (parts by weight) | 0.24 | 0.24 | 0.24 | 0.24 | 0.24 |
| (D) (parts by weight) | 0.35 | 0.35 | 0.35 | 0.35 | 0.35 |
| Shore A hardness | 59 | 64 | 62 | 59 | 66 |
| Density (g/cm³) | 0.90 | 0.91 | 0.90 | 0.90 | 0.90 |
| Melt-flow index (g/10 min) | 26 | 5.5 | 10 | 25.89 | 4.3 |
| Puncture strength (kgf/mm) | 6.5 | 4.4 | 4.2 | 5.8 | 3.9 |
| Flow length (cm) | 49 | 37.1 | 34 | 35 | 31.8 |

**Table 2**

| | Comparative Example | | | | | | | |
|---|---|---|---|---|---|---|---|---|
| | 1 | 2 | 3 | 4 | 5 | 6 | 7 | 8 |
| (a1) (wt%) | - | 100 | - | 58.82 | 41.18 | 58.82 | 80 | 5 |
| (a2) (wt%) | - | - | - | 41.18 | - | - | - | - |
| (a3) (wt%) | 100 | - | 58.82 | - | 58.82 | 41.18 | 20 | 95 |
| (a4) (wt%) | - | - | 41.18 | - | - | - | - | - |
| (b1) (parts by weight) | 11.18 | 11.18 | 11.18 | - | - | 11.18 | 11.18 | 11.18 |
| (b2) (parts by weight) | 5.88 | 5.88 | - | 5.88 | - | 5.88 | 5.88 | 5.88 |
| (C) (parts by weight) | 0.24 | 0.24 | 0.24 | 0.24 | 0.24 | 0.24 | 0.24 | 0.24 |
| (D) (parts by weight) | 0.35 | 0.35 | 0.35 | 0.35 | 0.35 | 0.35 | 0.35 | 0.35 |
| Shore A hardness | 55 | 77 | 64 | 79 | 60 | 68 | 71 | 53 |
| Density (g/cm³) | 0.90 | 0.91 | 0.90 | 0.91 | 0.91 | 0.91 | 0.91 | 0.90 |
| Melt-flow index (g/10 min) | 40 | 0.5 | 37 | 0.3 | 9.5 | 3 | 1.1 | 71 |
| Puncture strength (kgf/mm) | 3.3 | 1.8 | 3.6 | 1.6 | 3.1 | 3.6 | 2.4 | 8.8 |
| Flow length (cm) | 55 | 15 | 39.4 | 11 | 22 | 27 | 19.5 | 68 |

It can be seen from Tables 1 and 2 that the thermoplastic resin composition according to the present invention had properties of high processability, light weight, high durability, and high balance therebetween.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A thermoplastic resin composition comprising:
about 100 parts by weight of a styrene-ethylene-butylene-styrene copolymer comprising about 10 wt% to about 50 wt% of a first styrene-ethylene-butylene-styrene copolymer having a weight average molecular weight of about 250,000 g/mol to about 350,000 g/mol and about 50 wt% to about 90 wt% of a second styrene-ethylene-butylene-styrene copolymer having a weight average molecular weight of about 100,000 g/mol to about 200,000 g/mol; and
about 1 part by weight to about 25 parts by weight of a polyolefin resin.

2. The thermoplastic resin composition according to claim 1, wherein the first styrene-ethylene-butylene-styrene copolymer has a melt-flow index (MI) of about 1 g/10 min to about 7 g/10 min, as measured at a temperature of 230°C under a load of 2.16 kg in accordance with ASTM D1238, and the second styrene-ethylene-butylene-styrene copolymer has a melt-flow index of about 10 g/10 min to about 30 g/10 min, as measured at a temperature of 230°C under a load of 2.16 kg in accordance with ASTM D1238.

3. The thermoplastic resin composition according to claim 1 or 2, wherein the first styrene-ethylene-butylene-styrene copolymer has a styrene content of about 30 wt% to about 40 wt% and the second styrene-ethylene-butylene-styrene copolymer has a styrene content of about 5 wt% to about 30 wt%.

4. The thermoplastic resin composition according to any one of claims 1 to 3, wherein a weight ratio of the first styrene-ethylene-butylene-styrene copolymer to the second styrene-ethylene-butylene-styrene copolymer is about 1:1 to about 1:4.

5. The thermoplastic resin composition according to any one of claims 1 to 4, wherein the polyolefin resin comprises a polyethylene resin and a polypropylene resin, a weight ratio of the polyethylene resin to the polypropylene resin being about 1:1 to about 3:1.

6. The thermoplastic resin composition according to any one of claims 1 to 5, further comprising:
about 0.01 parts by weight to about 5 parts by weight of an antioxidant, the antioxidant comprising a phenol antioxidant, an amine antioxidant, a sulfur antioxidant, a phosphorus antioxidant, or a combination thereof.

7. The thermoplastic resin composition according to any one of claims 1 to 6, further comprising:
about 0.01 parts by weight to about 5 parts by weight of a lubricant, the lubricant comprising a fatty acid wax, a fatty acid amide wax, a hydrocarbon wax, or a combination thereof.

8. The thermoplastic resin composition according to any one of claims 1 to 7, wherein the thermoplastic resin composition has a Shore A hardness of about 59 or more, as measured in accordance with ISO 868.

9. The thermoplastic resin composition according to any one of claims 1 to 8, wherein the thermoplastic resin composition has a melt-flow index (MI) of about 4 g/10 min or more, as measured at a temperature of 230°C under a load of 5 kg in accordance with ISO 1133.

10. The thermoplastic resin composition according to any one of claims 1 to 9, wherein the thermoplastic resin composition has a puncture strength of about 3.9 kgf/mm or more, as measured at a rate of 100 mm/min in accordance with ASTM D3763-98.

11. A molded article formed of the thermoplastic resin composition according to any one of claims 1 to 10.
